# EUROPEAN PATENT APPLICATION

(11) **EP 1 460 706 A1**
(43) Date of publication of application: **22.09.2004**
(21) Application number: 02790881.3
(22) Date of filing: 26.12.2002
(51) Int. Cl.: H01M 10/40, H01M 6/18, H01M 4/02, H01M 4/06

(54) **LITHIUM POLYMER CELL AND MANUFACTURING METHOD THEREOF**

(30) Priority: 27.12.2001 JP 2001396127
(71) Applicant: The Nippon Synthetic Chemical Industry Co., Ltd., Osaka-shi, Osaka 531-0076 (JP); National Institute of Advanced Industrial Science and Technology, Tokyo 100-8921 (JP)
(72) Inventor: SAKAI, Tetsuo, Kansai Cntr. of NATIONAL INSTITUTE, Ikeda-shi, Osaka 563-8577 (JP); MAEDA, Seiji, Central Res. Lab. of The NIPPON SYNT, Ibaraka-shi, Osaka 567-0052 (JP); SAITO, Yoichiro, Central Res. Lab. of NIPPON SYNT., Ibaraki-shi, Osaka 567-0052 (JP)
(74) Representative: Müller-Boré & Partner Patentanwälte
(86) International application number: PCT/JP2002/013568
(87) International publication number: WO 2003/056652

(57) **Abstract**

The present invention provides a lithium polymer cell having high ion conductivity and solid strength high enough to be used as a solid electrolyte for electro-chemical element.

The present invention relates to a lithium polymer cell sandwiching between a positive electrode and a negative electrode a solid electrolyte formed from a cured film formed of a lithium ion conductive composition comprising one or more curable oligomers, one or more ethylenically unsaturated monomers and electrolytic salts, and a manufacturing method thereof.

## Description

### TECHNICAL FIELD

The present invention relates to a lithium polymer cell and manufacturing method thereof.

### BACKGROUND ART

Polyether copolymers having alkylene oxide groups, etc., are known as resins usable as electrolytes (for example, Japanese Unexamined Patent Publication No. 1997-324114). Such resins have to be first dissolved in an organic solvent, spread, dried and formed into a film. The obtained film then has to be attached as an electrolytic membrane to a negative electrode. In such a process, when the film is made very thin, the film strength becomes unsatisfactory.

When such an electrolyte resin is applied to a negative electrode, especially to a lithium foil, because the resin is solvent based, the solvent reacts with lithium in the negative electrode and damages it. This renders a problem of degrading cell performance, and therefore there is a limitation in how thin films can be made by methods wherein a solvent is used in film formation.

Furthermore, when a solid electrolytic material containing a solvent is directly applied to a composite positive electrode, the composite positive electrode is partially dissolved or swollen. This may degrade the performance of the electrode.

An object of the present invention is to provide a lithium polymer cell with excellent cell performance (conductivity, charge discharge properties, etc.) by forming an electrolyte without using a solvent, and a manufacturing method thereof.

### BRIEF DESCRIPTION OF THE DRAWINGS

Fig. 1 is a flowchart showing an electrode production process.

Fig. 2 shows charge discharge properties (1) of the cell, specifically, curves upward slanting to the right indicate conditions when the cell is charged, and curves downward slanting to the right indicate conditions when the cell is discharged. Each curve shows a charge or discharge cycle. As is clear from these curves, charge and discharge are performed in a stable manner.

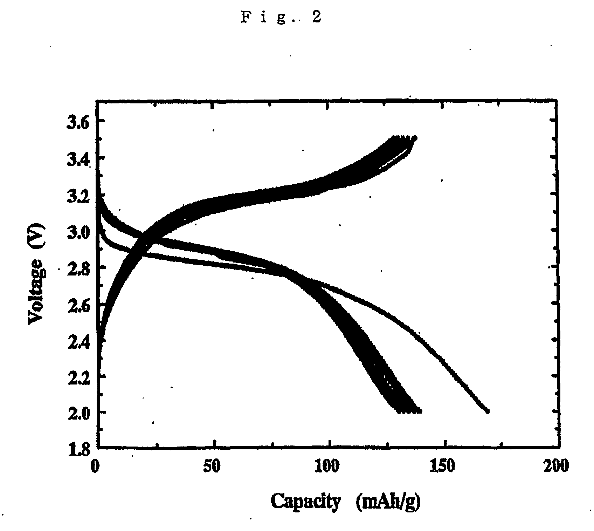

In Fig. 2, the positive electrode is a Mn-based composite positive electrode, the SPE (solid polyelectrolyte) is composed of urethane acrylate-based resin, the negative electrode is composed of lithium, charge discharge current is set at 0.05 mA/cm², and the voltage range is set at 3.5-2.0 V.

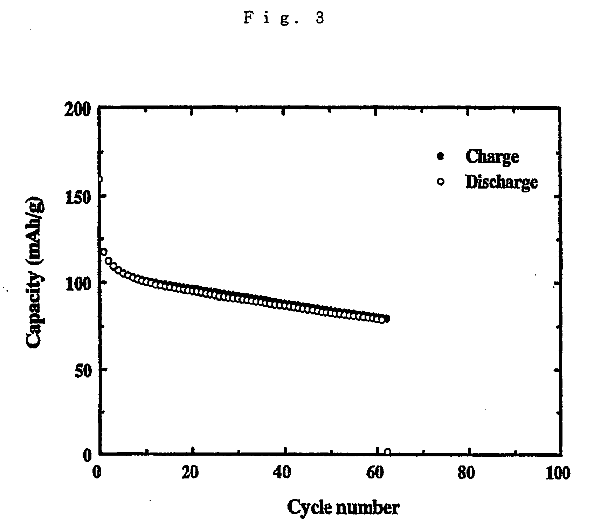

Fig. 3 shows charge-discharge cycle properties (2) of the cell, specifically, it shows the change in capacity when charge-discharge cycle is repeated. It is clear from the figure that even after many cycles, the cell exhibits little decrease in its capacity and excellent durability.

In Fig. 3, the positive electrode is a Mn-based composite positive electrode, the SPE is composed of urethane acrylate-based resin, the negative electrode is composed of lithium, the charge discharge current is set at 0.1 mA/cm² and the voltage range is set at 3.5-2.0 V.

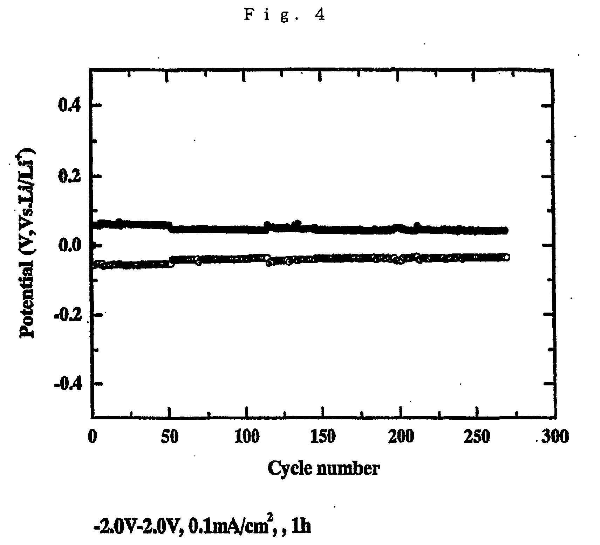

Fig. 4 shows the results of lithium ion conducting test. The figure shows a change in potential when a current of 0.1 mA/cm² was applied from the right and the left sides of a sample composed of Li/cured film/Li. As is clear from the figure, even after many cycles, change in resistance is small.

In a cell using conventional solvents, the resistance is greater than that of the present invention.

### DISCLOSURE OF THE INVENTION

The present inventors conducted extensive research in view of the above drawbacks of the prior art and completed the invention by using a lithium ion conductive composition that is free from solvent and in a liquid state at ordinary temperatures. The invention provides a lithium polymer (primary and secondary) cell and a manufacturing method thereof as described below.
Item 1. A lithium polymer cell sandwiching, between a positive electrode and a negative electrode, a solid electrolyte comprising a cured film obtained from a lithium ion conductive composition that contains one or more curable oligomers, one or more ethylenically unsaturated monomers and one or more electrolytic salts.
Item 2. A cell according to Item 1, wherein a composite positive electrode is connected to a solid electrolyte-negative electrode-assembly that is obtained by forming a cured film on a lithium foil using a lithium ion conductive composition containing one or more curable oligomers, one or more ethylenically unsaturated monomers and one or more electrolytic salts.
Item 3. A cell according to Item 1, wherein a negative electrode comprising a lithium foil is connected to a solid electrolyte-positive electrode-assembly that is obtained by forming a cured film on a composite positive electrode using a lithium ion conductive composition containing one or more curable oligomers, one or more ethylenically unsaturated monomers and one or more electrolytic salts.
Item 4. A cell according to Item 1, wherein a solid electrolyte-negative electrode-assembly that is obtained by forming a cured film on a lithium foil using a lithium ion conductive composition containing one or more curable oligomers, one or more ethylenically unsaturated monomers and one or more electrolytic salts is connected to a solid electrolyte-positive electrode-assembly that is obtained by forming a cured film on a composite positive electrode using a lithium ion conductive composition containing one or more curable oligomers, one or more ethylenically unsaturated monomers and one or more electrolytic salts in such a manner that the solid electrolyte surfaces thereof are in contact with each other.
Item 5. A cell according to Item 1, wherein the curable oligomer is urethane(meth)acrylate and/or a polyisocyanate derivative having a branched structure.
Item 6. A cell according to Item 1, wherein the thickness of the lithium ion conductive cured film is 5-100 µm.
Item 7. A cell according to Item 1, wherein the lithium ion conductive composition further contains fine particles of silicon oxide.
Item 8. A cell according to Item 1, wherein the lithium ion conductive composition further contains electrolytic solution.
Item 9. A method for manufacturing a lithium polymer cell comprising the steps of:
   on a lithium foil, applying a lithium ion conductive composition that is free from solvent and contains one or more curable oligomers, one or more ethylenically unsaturated monomers and one or more electrolytic salts;
   forming a solid electrolyte-negative electrode-assembly, the solid electrolyte comprising a lithium ion conductive cured film formed by curing the lithium ion conductive composition;
   forming a composite positive electrode by applying a positive electrode material to a conductive metal plate; and
   connecting the solid electrolyte-negative electrode-assembly to the composite positive electrode.
Item 10. A method for manufacturing a lithium polymer cell comprising the steps of:
   forming a composite positive electrode by applying a positive electrode material to a conductive metal plate;
   on the composite positive electrode, applying a lithium ion conductive composition that contains one or more curable oligomers, one or more ethylenically unsaturated monomers and one or more electrolytic salts;
   forming a solid electrolyte-positive electrode-assembly, the solid electrolyte comprising a lithium ion conductive cured film by curing the lithium ion conductive composition; and
   connecting the solid electrolyte-positive electrode-assembly to a negative electrode that is formed of a lithium foil.
Item 11. A method for manufacturing a lithium polymer cell comprising the steps of:
   forming a composite positive electrode by applying a positive electrode material to a conductive metal plate;
   on the composite positive electrode, applying a lithium ion conductive composition that contains one or more curable oligomers, one or more ethylenically unsaturated monomers and one or more electrolytic salts;
   forming a solid electrolyte-positive electrode-assembly, the solid electrolyte comprising a lithium ion conductive cured film formed by curing the lithium ion conductive composition;
   on a lithium foil, applying a lithium ion conductive composition that is free from solvent and contains one or more curable oligomers, one or more ethylenically unsaturated monomers and one or more electrolytic salts;
   forming a solid electrolyte-negative electrode-assembly, the solid electrolyte comprising a lithium ion conductive cured film formed by curing the lithium ion conductive composition; and
   connecting the solid electrolyte-negative electrode-assembly to the solid electrolyte-positive electrode-assembly in such a manner that the solid electrolyte surfaces thereof are in contact with each other.
Item 12. A method for manufacturing a lithium polymer cell according to any one of Items 9-11, wherein the positive electrode and the negative electrode are sequentially formed and the electrodes are then connected.
Item 13. A method for manufacturing a lithium polymer cell according to any one of Items 9-11, wherein the lithium ion conductive composition further contains fine particles of silicon oxide.
Item 14. A method for manufacturing a lithium polymer cell according to any one of Items 9-11, wherein the lithium ion conductive composition further contains electrolytic solution.

The thickness of the lithium foil used in negative electrodes of the lithium polymer cell of the present invention is generally about 10-500 µm, preferably about 50-200 µm and more preferably about 50-150 µm. A lithium ion conductive cured film is applied to the surface of the lithium foil fixed on a current collector formed from a copper foil, iron foil, etc.

It is preferable that the lithium ion conductive cured film formed of the lithium ion conductive composition be "directly" formed on the lithium foil. Here, "directly" formed means that, because the lithium ion conductive composition is free from solvent, it can be directly applied to the surface of the lithium foil and then cured to obtain a lithium ion conductive cured film. The definition "directly" intends to exclude the case where a lithium ion conductive cured film is formed separately and then attached to the lithium foil. By employing a method wherein a lithium ion conductive cured film is directly formed on a lithium foil using a lithium ion conductive composition that does not contain solvent, it becomes possible to obtain a satisfactory strength even when the film is thin, improving the cell performance. Furthermore, this method is advantageous in that oxidation of the surface of the lithium metal is prevented and handling of the film becomes easier.

It is preferable that the thickness of the lithium ion conductive cured film be about 5-100 µm and more preferably about 10-50 µm.

The lithium ion conductive composition is characterized in that it does not contain a solvent but contains one or more curable oligomers, one or more ethylenically unsaturated monomers and one or more electrolytic salts, and, as optional ingredients, it may further contain fine particles of silicon oxide or an electrolytic solution. From the viewpoints of making the coating film thin, improving the conductivity, stability against the lithium metal, and the requirement of having a withstand voltage of not smaller than 3.5 V and more preferably not smaller than 4 V, it is preferable that the lithium ion conductive composition be made of (I) one or more curable oligomers {e.g., urethane(meth)acrylate, epoxy(meth)acrylate, polyester(meth)acrylate, and especially urethane(meth)acrylate}, (II) one or more ethylenically unsaturated monomers and (III) one or more electrolytic salts, and, as optional component, it may further comprise silicon oxide fine particles and/or electrolytic solutions.

From the viewpoint of ionic conductivity, it is also preferable that polyisocyanate derivatives having a branched structure be used instead of or in combination with urethane(meth)acrylates.

### (I) Curable oligomer

### (I-1) Urethane(meth)acrylate

It is preferable that urethane(meth)acrylates be obtained by reacting a polyol, polyisocyanate and hydroxy(meth)acrylate.

The polyols are not limited and usable examples thereof include ethylene glycol, propylene glycol, butylene glycol, 1,4-butanediol, 1,6-hexanediol, neopentyl glycol, cyclohexanedimethanol, hydrogenated bisphenol A, polycaprolactone, trimethylolethane, trimethylolpropane, polytrimethylolpropane, pentaerythritol, polypentaerythritol, sorbitol, mannitol, glycerin, polyglycerin and like polyhydric alcohols; diethylene glycol, triethylene glycol, tetraethylene glycol, dipropylene glycol, polyethylene glycol, polypropylene glycol, polybutylene glycol, polytetramethylene glycol; polyetherpolyols having at least one unit selected from the group consisting of ethylene oxide, propylene oxide, tetramethylene oxide, random or block copolymers of ethylene oxide/propylene oxide, random or block copolymers of ethylene oxide/tetramethylene oxide, random or block copolymer of propylene oxide/tetramethylene oxide, random or block copolymers of ethylene oxide/propylene oxide/tetramethylene oxide; condensation products of polyhydric alcohols or polyetherpolyols with maleic anhydride, maleic acid, fumaric acid, itaconic anhydride, itaconic acid, adipic acid, isophthalic acid or like polybasic acids, such as polyesterpolyols, caprolactone modified polytetramethylene polyols and like caprolactone modified polyols; polyolefin-based polyols, hydrogenated polybutadiene polyols and like polybutadiene-based polyols; etc.

Among these, preferable examples include polyether polyols having at least one unit selected from the group consisting of ethylene oxide, propylene oxide, tetramethylene oxide, random or block copolymers of ethylene oxide/propylene oxide, random or block copolymers of ethylene oxide/tetramethylene oxide, and random or block copolymers of propylene oxide/tetramethylene oxide, random or block copolymers of ethylene oxide/propylene oxide/tetramethylene oxide, with a molecular weight of generally 200-6000, preferably 500-5000, and more preferably 800-4000. When the molecular weight of the polyol is less than 200, it adversely affects conductivity, and when the molecular weight of the polyol exceeds 6000, it significantly reduces the strength of the membrane and thus not preferable.

There is no limitation to the polyisocyanates used and it is possible to use aromatic, aliphatic, cyclic aliphatic, alicyclic and like polyisocyanates, etc. More specifically such examples include tolylene diisocyanate (TDI), diphenylmethane diisocyanate (MDI), hydrogenated diphenylmethane diisocyanate (H-MDI), polyphenylmethane polyisocyanate, modified diphenylmethane diisocyanate (modified MDI), hydrogenated xylylene diisocyanate (H-XDI), xylylene diisocyanate (XDI), hexamethylene diisocyanate (HDI), trimethylhexamethylene diisocyanate (TMDI), tetramethylxylylene diisocyanate (m-TMXDI), isophorone diisocyanate (IPDI), norbornene diisocyanate (NBDI), 1,3-bis(isocyanatomethyl)cyclohexane and like polyisocyanates; trimers of these polyisocyanates; 2-isocyanatoethyl capronate-2,6-diisocyanate; and reaction products of these polyisocyanates and polyols. From the viewpoint of conductivity, isophorone diisocyanate (IPDI), hexamethylene diisocyanate (HDI) and trimethylhexamethylene diisocyanate (TMDI) are especially preferable.

Furthermore, the hydroxy(meth)acrylates are not limited and may include, for example, 2-hydroxyethyl(meth)acrylate, 2-hydroxypropyl(meth)acrylate, 2-hydroxybutyl(meth)acrylate, 2-hydroxyethyl acryloyl phosphate, 4-butylhydroxy(meth)acrylate, 2-(meth)acryloyloxyethyl-2-hydroxypropyl phthalate, 2-hydroxy-3-(meth)acryloyloxypropyl(meth)acrylate, caprolactone modified 2-hydroxyethyl(meth)acrylate, pentaerythritol tri(meth)acrylate, dipentaerythritol penta(meth)acrylate, ethylene oxide modified hydroxy(meth)acrylate, propylene oxide modified hydroxy(meth)acrylate, ethylene oxide-propylene oxide modified hydroxy(meth)acrylate, ethylene oxide-tetramethylene oxide modified hydroxy(meth)acrylate, propylene oxide-tetramethylene oxide modified hydroxy(meth)acrylate, etc. Among these, 2-hydroxyethyl(meth)acrylate, 2-hydroxypropyl(meth)acrylate and ethylene oxide modified hydroxy(meth)acrylate are preferable.

There is no limitation to the method for manufacturing the urethane(meth)acrylates as long as a polyol, polyisocyanate and hydroxy(meth)acrylate are reacted and various known methods can be employed. Examples of such methods include: (i) the three components, i.e., polyol, polyisocyanate and hydroxy(meth)acrylate, are mixed and reacted simultaneously; (ii) polyol and polyisocyanate are reacted to obtain a urethane-isocyanate intermediate product having at least one isocyanate group per molecule. The intermediate product is then reacted with hydroxy(meth)acrylate; (iii) polyisocyanate and hydroxy(meth)acrylate are reacted to obtain a urethane(meth)acrylate intermediate product having at least one isocyanate group per molecule and the intermediate product is then reacted with polyol.

In the above-described reactions, catalysts such as dibutyltin dilaurate, etc., may be used to accelerate the reaction.

### (I-2) Polyisocyanate derivatives having a branched structure

Polyisocyanate derivatives having a branched structure can be preferably obtained by reacting polyols, polyisocyanates, alkylene glycol monoalkyl ethers, and, if necessary, further with hydroxy(meth)acrylates.

The polyols are not limited and the same polyols as described above can be used.

There is no limitation to the polyisocyanates and it is possible to use, for example, aromatic, aliphatic, cyclic aliphatic, alicyclic and like polyisocyanates. Specific examples thereof include trimers of polyisocyanates such as tolylene diisocyanate (TDI), diphenylmethane diisocyanate (MDI), hydrogenated diphenylmethane diisocyanate (H-MDI), polyphenylmethane polyisocyanate, modified diphenylmethane diisocyanate (modified MDI), hydrogenated xylylene diisocyanate (H-XDI), xylylene diisocyanate (XDI), hexamethylene diisocyanate (HDI), trimethylhexamethylene diisocyanate (TMDI), tetramethylxylylene diisocyanate (m-TMXDI), isophorone diisocyanate (IPDI), norbornene diisocyanate (NBDI), 1,3-bis(isocyanatomethyl)cyclohexane; reaction products of these polyisocyanates and polyols (including those having 3 or more terminal isocyanate groups), 2-isocyanatoethyl capronate-2,6-diisocyanate, etc. From the viewpoint of easy handling and desirable viscosity, trimers of hexamethylene diisocyanate (HDI), 2-isocyanatoethyl capronate-2,6-diisocyanate, etc., are especially preferable.

There is no limitation to the polyalkylene glycol monoalkyl ethers and it is possible to use diethylene glycol, triethylene glycol, tetraethylene glycol, dipropylene glycol, polyethylene glycol, polypropylene glycol, polybutylene glycol, polytetramethylene glycol, etc.; and polyetherpolyol and like monoalkyl ethers that have at least one sub-unit selected from the group consisting of ethylene oxide, propylene oxide, tetramethylene oxide; random or block copolymers of ethylene oxide/propylene oxide, random or block copolymers of ethylene oxide/tetramethylene oxide, random or block copolymers of propylene oxide/tetramethylene oxide, random or block copolymers of ethylene oxide/propylene oxide/tetramethylene oxide, etc.

There is no limitation to the hydroxy(meth)acrylate and those as described above can be used.

### (II) Ethylenically unsaturated monomers

Examples of ethylenically unsaturated monomers include
· polymerizable monomers represented by general formula (1) 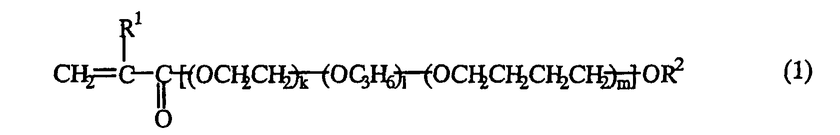 wherein R¹ represents hydrogen or a methyl group, R² represents hydrogen or a straight-chain or branched C₁-C₁₈ alkyl group, and k, l, m are each an integer with the proviso k + l + m ≥ 1. The copolymers in the brackets may be block or random. Examples of straight-chain or branched C₁-C₁₈ alkyl groups include methyl, ethyl, n-propyl, isopropyl, n-butyl, isobutyl, sec-butyl, t-butyl, pentyl, hexyl, octyl, nonyl, decyl, undecyl, dodecyl, tetradecyl, hexadecyl, octadecyl, etc.;
· 2-vinylpyrrolidone, acryloyl morpholine, 2-hydroxybutyl vinylether, ethylethylene glycol mono(meth)acrylate, propylethylene glycol mono(meth)acrylate, phenylethylene glycol mono(meth)acrylate and like monofunctional monomers,
· ethylene glycol di(meth)acrylate, diethylene glycol di(meth)acrylate, tetraethylene glycol di(meth)acrylate, polyethylene glycol di(meth)acrylate, propylene glycol di(meth)acrylate, polypropylene glycol di(meth)acrylate, butylene glycol di(meth)acrylate, neopentyl glycol di(meth)acrylate, ethylene oxide modified bisphenol A type di(meth)acrylate, propylene oxide modified bisphenol A type di(meth)acrylate, 1,6-hexanediol di(meth)acrylate, glycerin di(meth)acrylate, pentaerythritol di(meth)acrylate, ethylene glycol diglycidylether di(meth)acrylate, diethylene glycol diglycidylether di(meth)acrylate, phthalic acid diglycidyl ester di(meth)acrylate, hydroxy pivalic acid modified neopentyl glycol di(meth)acrylate and like difunctional monomers;
· trimethylolpropane tri(meth)acrylate, ethylene oxide modified trimethylolpropane tri(meth)acrylate, pentaerythritol tri(meth)acrylate, pentaerythritol tetra(meth)acrylate, dipentaerythritol hexa(meth)acrylate, dipentaerythritol penta(meth)acrylate, tri(meth)acryloyloxy ethoxy trimethylolpropane, glycerin polyglycidylether poly(meth)acrylate and like tri- or higher functional monomers, etc. Among these, the monomers represented by general formula (1) are preferable.

It is preferable that those ethylenically unsaturated monomers other than those represented by general formula (1) be less than 20 wt.% based on the lithium ion conductive oligomer composition.

Specific examples of monomers represented by general formula (1) include polyethylene glycol mono(meth)acrylate, 2-hydroxypropyl(meth)acrylate, 3-hydroxypropyl(meth)acrylate, polypropylene glycol mono(meth)acrylate, polyethylene glycol-polypropylene glycol mono(meth)acrylate, poly(ethylene glycol-tetramethylene glycol)mono(meth)acrylate, poly(propylene glycol-tetramethylene glycol)mono(meth)acrylate, methoxy polyethylene glycol mono(meth)acrylate, ethoxy polyethylene glycol mono(meth)acrylate, octoxy polyethylene glycol-polypropylene glycol mono(meth)acrylate, lauroxy polyethylene glycol mono(meth)acrylate, stearoxy polyethylene glycol mono(meth)acrylate, etc. Among these, from the viewpoint of conductivity, methyoxy polyethylene glycol mono(meth)acrylates wherein, in general formula (1), R¹ is a hydrogen or methyl group; R² is a methyl group; k is 3, 9 or 12; 1 is 0; and m is 0, are preferable.

### (III) Electrolytic salts

There is no limitation to electrolytic salts as long as they can be used as general electrolytes. Examples of usable electrolytic salts include LiBR₄ (where R is a phenyl or alkyl group), LiPF₆, LiSbF₆, LiAsF₆, LiBF₄, LiClO₄, CF₃SO₃Li, (CF₃SO₂)₂NLi, (CF₃SO₂)₃CLi, C₆F₉SO₃Li, C₈F₁₇SO₃Li, LiAlCl₄, lithium tetrakis[3,5-bis(trifluoromethyl)phenyl]borate and like substances and mixtures thereof, etc. Among these, CF₃SO₃Li, (CF₃SO₂)₂NLi, (CF₃SO₂)₃CLi, C₆F₉SO₃Li, C₈F₁₇SO₃Li and like sulfonic acid anions or imide salts electrolytes are preferably used.

From the viewpoint of operability, the preferable ratio of chemical constituents of the lithium ion conductive composition is such that the content of one or more curable oligomers (preferably, urethane(meth)acrylate and/or polyisocyanate derivative having a branched structure) is preferably 60-95 parts by weight, more preferably 65-95 parts by weight, and particularly preferably 65-90 parts by weight; and the content of one or more ethylenically unsaturated monomers is preferably 5-40 parts by weight, more preferably 5-35 parts by weight, and particularly preferably 10-35 parts by weight. When the lithium ion conductive composition contains silicon oxide fine powder, it is preferable that the content of silicon oxide fine powder be 5-30 wt.% relative to the total amount of urethane(meth)acrylate and/or polyisocyanate derivatives having a branched structure and ethylenically unsaturated monomers.

It is preferable that the grain size of the fine particles of silicon oxide be 1 µm or less.

Specific examples of silicon oxides are not limited; however, hydrophobic silicon oxides are preferable. When hydrophilic silicon oxides are used, the viscosity of the mixture becomes too high and formation of a thin film becomes difficult, and is thus undesirable. Among hydrophobic silicon oxides, silicon oxides that rendered hydrophobic by dimethyl groups are preferable. Specific examples of such hydrophobic silicon oxides include "Aerosil R972" (manufactured by Nippon Aerosil Co., Ltd.) and like hydrophobic silicas, etc. The content of silica, based on 100 parts of lithium ion conductive composition, is preferably 0.1-30 parts and more preferably 0.5-10 parts.

Regarding electrolytic salts, it is preferable that the molar ratio of lithium atoms to etheric oxygen atoms in the composition be 0.02-0.2 and more preferably 0.03-0.1.

There are several ways to mix the polymerizable components (for example, urethane(meth)acrylate and/or polyisocyanate derivatives having a branched structure and like curable oligomers and ethylenically unsaturated monomers) with the electrolytic salts of the lithium ion conductive composition, including (a) urethane(meth)acrylate and/or polyisocyanate derivative having a branched structure, ethylenically unsaturated monomer, electrolytic salt and, as an optional ingredient, fine particles, are mixed simultaneously; (b) electrolytic salt and, as an optional ingredient, fine particles of silicon oxide are dispersed in the ethylenically unsaturated monomer and then mixed with the one or more curable oligomers (preferably, urethane(meth)acrylate and/or polyisocyanate derivatives having a branched structure), as well as other methods; however, from the viewpoint of ease of handling and mixing effectiveness, (b) is preferable.

With respect to electric conductivity, it is preferable that the lithium ion conductive composition further comprise a electrolytic solution. Examples of such electrolytes include carbonate solvents (propylene carbonate, ethylene carbonate, butylene carbonate, dimethyl carbonate, diethyl carbonate), amide solvents (N-methylformamide, N-ethylformamide, N,N-dimethylformamide, N-methylacetamide, N-ethylacetamide and N-methylpyrrolidone), lactone solvents (γ-butyrolactone, γ-valerolactone, δ-valerolactone, 3-methyl-1,3-oxazolidine-2-one, etc.), alcohol solvents (ethylene glycol, propylene glycol, glycerin, methylcellosolve, 1,2-butanediol, 1,3-butanediol, 1,4-butanediol, diglycerin, polyoxyalkylene glycol cyclohexanediol, xylene glycol, etc.), ether solvents (methylal, 1,2-dimethoxyethane, 1,2-diethoxyethane, 1-ethoxy-2-methoxyethane, alkoxy polyalkylene ethers, etc.), nitrile solvents (benzonitrile, acetonitrile, 3-methoxy propionitrile, etc.), phosphoric acids and phosphate solvents (orthophosphoric acid, metaphosphoric acid, pyrophosphoric acid, polyphosphoric acid, phosphorous acid, trimethylphosphate, etc.), 2-imidazolidinones (1,3-dimethyl-2-imidazolidinone, etc.), pyrrolidones, sulfolane solvents (sulfolane, tetramethylene sulfolane), furan solvents (tetrahydrofuran, 2-methyltetrahydrofuran, 2,5-dimethoxytetrahydrofuran), dioxolane, dioxane, dichloroethane, etc. They can be used singly or in combination as a solvent mixture comprising two or more members. Among these, preferably used are carbonates, ethers and furan solvents.

There is no limitation to the preferable ratio of chemical constituents in cases where an electrolytic solution is used. However, the content of electrolytic solution is preferably 10-100 parts by weight, more preferably 10-70 parts by weight and particularly preferably 10-30 parts by weight based on 100 parts by weight of total weight of urethane(meth)acrylate and/or polyisocyanate derivatives having a branched structure and ethylenically unsaturated monomer.

Formation of the lithium ion conductive cured film of the invention is preferably achieved by coating a lithium foil with the lithium ion conductive composition, and then polymerizing the composition by irradiating with activating light and/or applying heat to cure the composition. In the present invention, from the viewpoint of ease of handling and production efficiency, it is preferable that the composition be polymerized and cured by irradiation with activating light.

Irradiation with activating light is generally performed using visible light rays, ultraviolet rays, electron beams, X-rays, etc. Among these, ultraviolet rays are preferable. In irradiation with ultraviolet rays, high pressure mercury lamp, extra-high pressure mercury lamp, carbon-arc lamp, xenon lamp, metal halide lamp, chemical lamp, etc., is used as a light source. There is no limitation to the radiation dose and can be suitably selected; however, it is preferable that the radiation be performed with an accumulated radiation dose of generally 100-1000 mJ/cm² and preferably 100-700 mJ/cm².

When the composition is polymerized and cured using such activating light, it is preferable that the content of photopolymerization initiators be, based on 100 parts by weight of polymerizable components of the lithium ion conductive composition (for example, urethane(meth)acrylate and/or polyisocyanate derivatives having a branched structure and like curable oligomers, and ethylenically unsaturated monomers), 0.3 parts by weight or more, and particularly preferably 0.5-5 parts by weight. When the accumulated radiation dose and/or content of photopolymerization initiators is small, sufficient strength of a film cannot be maintained; however, when they are unduly large, further improved effects cannot be attained, and is thus undesirable.

There is no limitation to the photopolymerization initiators and various kinds of known photopolymerization initiators can be used. Preferable examples thereof include benzophenone, P,P'-bis(dimethylamino)benzophenone, P,P'-bis(diethylamino)benzophenone, P,P'-bis(dibutylamino)benzophenone, benzoin, benzoin methyl ether, benzoin ethyl ether, benzoin isopropyl ether, benzoin n-butyl ether, benzoin phenyl ether, benzoin isobutyl ether, benzoylbenzoic acid, methyl benzoylbenzoate, benzyldiphenyldisulfide, benzyldimethylketal, dibenzyl, diacetyl, anthraquinone, naphthoquinone, 3,3'-dimethyl-4-methoxybenzophenone, dichloroacetophenone, 2-chlorothioxanthone, 2-methylthioxanthone, 2,4-diethylthioxanthone, 2,2-diethoxyacetophenone, 2,2-dichloro-4-phenoxyacetophenone, phenylglyoxylate, α-hydroxy isobutyl phenone, 1-(4-isopropylphenyl)-2-hydroxy-2-methyl-1-propanone, 2-methyl-[4-(methylthio)phenyl]-2-morpholino-1-propanone, tribromophenyl sulfone, tribromomethylphenyl sulfone, methyl benzoylformate, 2-hydroxy-2-methyl-1-phenylpropan-1-one 2,2-dimethoxy-1,2-diphenylmethan-1-one, 1-hydroxy-cyclohexyl-phenyl-ketone; 2,4,6-[tris(trichloromethyl)]-1,3,5-triazine, 2,4-[bis(trichloromethyl)]-6-(4'-methoxyphenyl)-1,3,5-triazine, 2,4-[bis(trichloromethyl)]-6-(4'-methoxynaphtyl)-1,3,5-triazine, 2,4-[bis(trichloromethyl)]-6-(piperonyl)-1,3,5-triazine, 2,4-[bis(trichloromethyl)]-6-(4'-methoxystyryl)-1,3,5-triazine and like triazine derivatives; acridine, 9-phenylacridine and like acridine derivatives; 2,2'-bis(o-chlorophenyl)-4,5,4',5'-tetraphenyl-1,2'-biimidazole, 2,2'-bis(o-chlorophenyl)-4,5,4',5'-tetraphenyl-1,1'-biimidazole, 2,2'-bis(o-fluorophenyl)-4,5,4',5'-tetraphenyl-1,1'-biimidazole, 2,2'-bis(o-methoxyphenyl)-4,5,4',5'-tetraphenyl-1,1'-biimidazole, 2,2'-bis(p-methoxyphenyl)-4,5,4',5'-tetraphenyl-1,1'-biimidazole, 2,4,2',4'-bis[bi(p-methoxyphenyl)]-5,5'-diphenyl-1,1'-biimidazole, 2,2'-bis(2,4-dimethoxyphenyl)-4,5,4',5'-diphenyl-1,1'-biimidazole, 2,2'-bis(p-methylthiophenyl)-4,5,4',5'-diphenyl-1,1'-biimidazole, bis(2,4,5-triphenyl)-1,1'-biimidazole, etc.; hexaarylbiimidazole derivatives of tautomers, etc., having covalent bonds at the 1,2'-, 1,4'-, or 2,4'- position as disclosed in Japanese Examined Patent Publication No. 1970-37377, triphenylphosphine; and 2-benzoyl-2-dimethylamino-1-[4-morpholinophenyl]-butane, etc. From the viewpoint of ease of handling, 2-hydroxy-2-methyl-1-phenylpropan-1-one, 2,2-dimethoxy-1,2-diphenylmethan-1-one, 1-hydroxy-cyclohexyl-phenyl-ketone, etc., are especially preferable.

When the composition is polymerized and cured by heat, it is preferable that thermal polymerization initiators be contained in a proportion of 0.1-5 parts by weight and more preferably 0.3-1 parts by weight based on 100 parts by weight of polymerizable components of the lithium ion conductive composition.

There is no limitation to the thermal polymerization initiators. Examples thereof include azobisisobutyronitrile, benzoylperoxide, lauroyl peroxide, ethyl methyl ketone peroxide, bis(4-t-butylcyclohexyl)peroxydicarbonate, diisopropyl peroxydicarbonate and like peroxydicarbonates, etc.

When the composition is polymerized and cured using both light and heat, it is preferable that the above-mentioned photopolymerization initiators and the above-mentioned thermal polymerization initiators be used in a combined manner.

If necessary, sensitizers, storage stabilizers, etc., can also be used in the invention. As sensitizers, urea, nitrile compounds (N,N-disubstituted-p-aminobenzonitrile, etc.), and phosphorus compounds (tri-n-butylphosphine, etc.) are preferable. As storage stabilizers, quaternary ammoniumchlorides, benzothiazole and hydroquinone are preferable.

The lithium ion conductive cured films are satisfactorily strong even they are very thin, and therefore they can be suitably used to obtain lithium ion cells (including primary and secondary cells) with excellent cell performances, such as conductivity and charge-discharge properties. In particular, when such cured films are used in secondary cells, they achieve remarkable effects. When silicon oxide, in particular, fine particles of hydrophobic silicon oxide, is added to the lithium ion conductive compositions, the mechanical strength of the solid electrolytic membrane and heat resistance thereof can be further improved without decreasing ion conductivity. This also prevents short-circuits across electrodes.

The lithium polymer cell of the present invention basically comprises a positive electrode, a negative electrode and a polymeric solid electrolyte, and, if necessary, a separator for use as a member for holding the polymer.

As a separator, materials that have low resistivity to ionic migration in an electrolytic solution can be used. Such materials include, for example, fine porous membranes, and nonwoven and woven fabrics comprising at least one member selected from polypropylene, polyethylene, polyester, polytetrafluoroethylene, polyvinyl alcohol and saponified ethylene-vinyl acetate copolymers. Using these materials makes it possible to completely prevent short circuits. When the solid polyelectrolyte of the invention functions as a separator, providing a separate separator becomes unnecessary.

In the invention, "composite positive electrode" means a substance obtained by applying a positive electrode material that is prepared by mixing a positive electrode active material with a composition comprising Ketjenblack, acetylene black and like conductive auxiliaries; poly(vinylidene fluoride) and like binders; and, if necessary, an ion conductive polymer; to a conductive metal plate (aluminum foil, etc.).

Examples of positive electrode active materials for use in a secondary cell of the invention include inorganic active materials, organic active materials and complexes thereof. Among these, inorganic active materials and complexes of inorganic active materials and organic active materials are especially preferable because of their large energy density.

Examples of usable inorganic active materials include, in a 3V system, Li_{0.3}MnO₂, Li₄Mn₅O₁₂, V₂O₅; in a 4V system, LiCoO₂, LiMn₂O₄, LiNiO₂ and like metal oxides, TiS₂, MoS₂, FeS and like metal sulfides, and complex oxides of these compounds and lithium. Examples of organic active materials include polyacetylene, polyaniline, polypyrrole, polythiophene, polyparaphenylene and like conductive polymers, (carbonaceous) organic disulfides, carbon disulfide, active sulfur and like sulfur based positive electrode materials, etc.

Examples of ion conductive polymers include polyethylene glycol dimethyl ether, polyethylene glycol diethyl ether and like polyethylene glycol dialkyl ethers; polyethylene glycol monoalkyl ether, polyethylene glycol and like polymers, etc.

Examples of negative electrode active materials for use in the cell of the invention include metallic lithium, alloys of lithium with aluminum, lead, silicon, magnesium, etc.; conductive polymers that can be subjected to cationic doping such as polypyridine, polyacetylene, polythiophene and their derivatives; SnO₂ and like oxides that can occlude lithium; Sn-based alloys, etc. Among these, lithium metals are most preferably used in the invention from the viewpoint of energy density.

In the invention, it is also preferable to form, on the positive electrode, a cured film composed of the lithium ion conductive composition (a composition comprising urethane(meth)acrylate and/or polyisocyanate derivatives having a branched structure and like curable oligomers, ethylenically unsaturated monomers, electrolytic salts, and, as optional ingredients, silicon oxide fine powders and/or an electrolytic solution).

In forming such a cured film, ion electro conductive polymers are not necessarily required and use of such polymers is selected depends on the necessity.

Specifically, it is preferable that the lithium ion conductive composition (a composition comprising urethane(meth)acrylate and/or branched-structured polyisocyanate derivatives and like curable oligomers, ethylenically unsaturated monomers, electrolytic salts, and, as optional ingredients, silicon oxide fine powders and/or electrolytic solution) be applied to a composite positive electrode, cured to obtain a solid electrolyte-positive electrode-assembly comprising a lithium ion conductive cured film, and then the solid electrolyte-positive electrode-assembly be made contact a negative electrode formed from a lithium foil.

Furthermore, it is also preferable in the invention that a solid electrolyte-negative electrode assembly obtained by forming a cured film that is composed of a lithium ion conductive composition on a lithium foil be connected to the solid electrolyte-positive electrode-assembly obtained by forming a cured film that is composed of a lithium ion conductive composition on a composite positive electrode in such a manner that their solid electrolyte faces come in contact with each other. More specifically, it is preferable that a positive electrode material be applied to a conductive metal plate to obtain a composite positive electrode, a lithium ion conductive composition be applied to the surface of the composite positive electrode, the composition be cured to obtain a solid electrolyte-positive electrode-assembly comprising a lithium ion conductive cured film; and in a separate step, a lithium ion conductive composition be applied to the surface of a lithium foil, and then the composition be cured to obtain a solid electrolyte-negative electrode-assembly comprising a lithium ion conductive cured film, and the thus obtained solid electrolyte-negative electrode-assembly and solid electrolyte-positive electrode-assembly be connected in such a manner that their solid electrolyte faces are in contact with each other.

There is no limitation to the form of the cell of the invention, and in particular, as a lithium ion polymer secondary cell, it can fill cell encasements of various types such as coins, sheets, tubes, gums, etc.

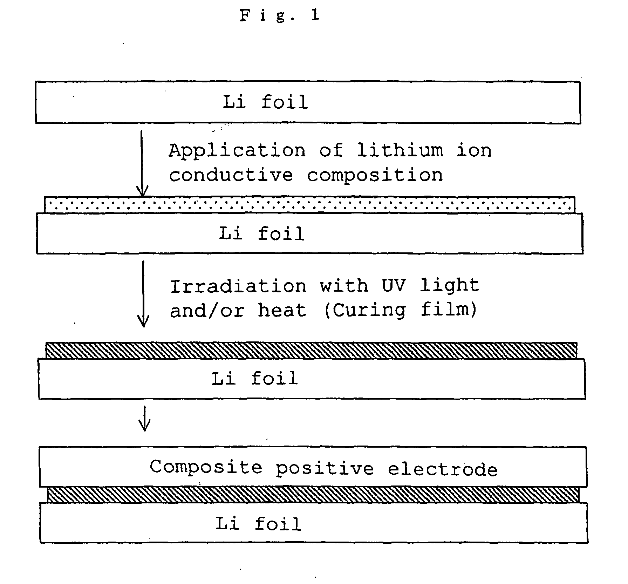

Fig. 1 shows the steps of preparing a cell of the invention.

First, a lithium ion conductive composition is applied to a Li foil, and then the obtained film is cured by irradiation with UV light. Thereafter, the composite positive electrode is attached to the cured film, obtaining a cell. However, the scope of the invention is not limited to this method, and, as described above, a cell of the invention can be obtained by applying a lithium ion conductive composition to a composite positive electrode, curing the obtained film by irradiating with UV light, and then attaching a negative electrode to the cured film. Alternatively, it is also possible to obtain a cell by applying a lithium ion conductive composition to both the negative and composite positive electrodes, curing the films by irradiating with UV light, and attaching the cured films of the negative electrode and the composite positive electrode to each other.

In the invention, a lithium polymer cell can be obtained by sequentially preparing a positive electrode and a negative electrode, and then attaching the electrodes in a continuous manner, a cell thereby being prepared in one continuous operation from preparing electrodes to obtaining the cell.

In conventional methods such as the batch style wherein, for example, a composite positive electrode or a negative electrode stored in a roll shape is first unwound from the roll and cut to a predetermined length, the film having a predetermined size and that will serve as an electrolytic layer is placed on the electrode, and then both the electrodes are attached. In comparison, the method of the invention makes it possible to perform unwinding of a composite positive electrode or a negative electrode, applying an electrolyte, curing, and attaching the electrodes in a continuous manner, making the control of each manufacturing step easier because, for example, cracks while preparing the composite positive electrode or negative electrode can be prevented.

It is preferable that attachment of a solid electrolyte-negative electrode-assembly to a composite positive electrode, attachment of a solid electrolyte-positive electrode-assembly to a negative electrode, and attachment of a solid electrolyte-positive electrode-assembly to a solid electrolyte-negative electrode-assembly be conducted by thermocompression bonding.

### BEST MODE FOR CARRYING OUT THE INVENTION

Hereunder, the present invention is explained in detail with reference to Examples.

Unless otherwise specified, "%" and "parts" as found in Examples indicate "wt.%" and "parts by weight".

### Reference Example 1

Dry air was introduced to a reaction vessel equipped with a stirrer, thermometer, reflux condensor and air inlet pipe, and 160 parts of isophorone diisocyanate (manufactured by Degussa-Huls AG, "VESTANAT IPDI"), 755 parts of ethylene oxide/propylene oxide block polyetherpolyol (manufactured by Asahi Denka Kogyo K.K., "CM-211", weight average molecular weight of about 2100) were placed therein, and then the mixture was heated to 70°C. Thereafter, a mixture solution comprising 85 parts of 2-hydroxyethyl acrylate, 0.4 parts of hydroquinone monomethyl ether and 0.1 parts of dibutyltin dilaurate (manufactured by Tokyo Fine Chemical Co., Ltd., "LIOI") was uniformly added thereto dropwise over 3 hours, and allowed to react. After completion of dropwise addition, the mixture was reacted for about 5 hours and then reaction was stopped after ensuring the disappearance of isocyanate by IR measurement, obtaining urethane acrylate (solid content: 99.8%, number average molecular weight: 4300).

Note that the number average molecular weights were measured by GPC (polystyrene standard).

### Reference Example 2

Dry air was introduced to a reaction vessel equipped with a stirrer, thermometer, reflux condensor and air inlet pipe, and 170 parts of isophorone diisocyanate (manufactured by Degussa-Huls AG, "VESTANAT IPDI"), 741 parts of ethylene oxide/propylene oxide random polyetherpolyol (manufactured by Asahi Denka Kogyo K.K., "PR-2008", weight average molecular weight of about 2000) were placed therein, and then the mixture was heated to 70°C. Thereafter, a mixture solution comprising 89 parts of 2-hydroxyethyl acrylate, 0.4 parts of hydroquinone monomethyl ether and 0.1 parts of dibutyltin dilaurate (manufactured by Tokyo Fine Chemical Co., Ltd., "LIOI") was uniformly added thereto dropwise over 3 hours, and allowed to react. After completion of dropwise addition, the mixture was reacted for about 5 hours and then reaction was stopped after ensuring the disappearance of isocyanate by IR measurement, obtaining urethane acrylate (solid content: 99.8%, number average molecular weight: 2700).

### Reference Example 3

Dry air was introduced to a reaction vessel equipped with a stirrer, thermometer, reflux condensor and air inlet pipe, and 97 parts of isophorone diisocyanate (manufactured by Degussa-Huls AG, "VESTANAT IPDI"), 870 parts of ethylene oxide/propylene oxide random polyetherpolyol (manufactured by Asahi Denka Kogyo K.K., "PR-3007", weight average molecular weight of about 3000) were placed therein, and then the mixture was heated to 70°C. Thereafter, a mixture solution comprising 33 parts of 2-hydroxyethyl acrylate, 0.4 parts of hydroquinone monomethyl ether and 0.1 parts of dibutyltin dilaurate (manufactured by Tokyo Fine Chemical Co., Ltd., "LIOI") was uniformly added thereto dropwise over 3 hours, and allowed to react. After completion of dropwise addition, the mixture was reacted for about 5 hours and then reaction was stopped after ensuring the disappearance of isocyanate by IR measurement, obtaining urethane acrylate (solid content: 99.8%, number average molecular weight: 7000).

### Reference Example 4

Dry air was introduced to a reaction vessel equipped with a stirrer, thermometer, reflux condensor and air inlet pipe, 72 parts of hexamethylene diisocyanate (manufactured by Takeda Chemical Industries, Ltd., "Takenate 700"), 850 parts of ethylene oxide/propylene oxide random polyetherpolyol (manufactured by Asahi Denka Kogyo K.K., "PR-3007", weight average molecular weight of about 3000) were placed therein, and then the mixture was heated to 70°C. Thereafter, a mixture solution comprising 78 parts of polyethylene glycol monoacrylate (manufactured by NOF CORPORATION, "AE-200"), 0.4 parts of hydroquinone monomethyl ether and 0.1 parts of dibutyltin dilaurate (manufactured by Tokyo Fine Chemical Co., Ltd., "LIOI") was uniformly added thereto dropwise over 3 hours, and allowed to react. After completion of dropwise addition, the mixture was reacted for about 5 hours and then reaction was stopped after ensuring the disappearence of isocyanate by IR measurement, obtaining urethane acrylate (solid content: 99.8%, number average molecular weight: 6800).

### Reference Example 5

Dry air was introduced to a reaction vessel equipped with a stirrer, thermometer, reflux condensor and air inlet pipe, and 177 parts of hexamethylene diisocyanate trimer isocyanurate (manufactured by Asahi Kasei Corporation, "Duranate TPA-100"), 634 parts of polyethylene glycol monomethyl ether (manufactured by NOF CORPORATION, "Uniox M-1000", weight average molecular weight of about 1000) were placed therein, and then the mixture was heated to 70°C. Thereafter, a mixture solution comprising 189 parts of polyethylene glycol monoacrylate (manufactured by NOF CORPORATION, "AE-400"), 0.4 parts of hydroquinone monomethyl ether and 0.1 parts of dibutyltin dilaurate (manufactured by Tokyo Fine Chemical Co., Ltd., "LIOI") was uniformly added thereto dropwise over 3 hours, and allowed to react. After completion of dropwise addition, the mixture was reacted for about 5 hours and then reaction was stopped after ensuring the disappearance of isocyanate by IR measurement, obtaining a polyisocyanate derivative (solid content: 99.8%, number average molecular weight: 4000).

### Example 1

### (1) Preparation of a solid electrolyte-negative electrode-assembly

LiN(CF₃SO₂)₂ (5 parts) or LiBF₄ (10 parts) was dissolved in methoxy polyethylene glycol monoacrylate (37 parts). To the resulting solution (28.1 parts), the urethane acrylate of Reference Example 1 (80 parts), and, as a photopolymerization initiator, 1-hydroxy-cyclohexyl-phenyl-ketone (manufactured by Ciba Specialty Chemicals K.K., "IRGACURE 184": 3 parts) were added with mixing, preparing a lithium ion conductive composition (photopolymerizable solution).

Then, the resulting composition was applied to the surface of a 100 µm-thick lithium foil using a wirebar in air, irradiated at an irradiation dose of 500 mJ/cm² using a high pressure mercury lamp, and thus forming the cured film having a thickness of 10 µm. A solid electrolyte-negative electrode-assembly was thereby prepared.

### (2) Preparation of positive electrode

Powdered Li_{0.33}MnO₂ (1.0 g) and Ketjenblack (0.15 g) were well mixed. Separately, 0.10 g of copolymer of ethylene oxide (88 mol%) and 2-(2-methoxyethoxy)ethy lglycidylether (12 mol%), and 0.033 g of LiN(CF₃SO₂)₂ were dissolved in acetonitrile. The acetonitrile solution was then added to the powder mix of Li_{0.33}MnO₂ and Ketjenblack, and mixed well using a mortar, obtaining positive electrode slurry. The obtained slurry was applied to the surface of a 20 µm-thick aluminum electrolytic foil, dried at 100°C for 15 minutes, preparing a composite positive electrode having a thickness of 30 µm.

The resulting positive electrode and the above solid electrolyte-negative electrode-assembly were attached by thermocompression bonding, filled in a cell encasement, obtaining a lithium polymer cell of the invention.

The charge discharge properties of the resulting lithium polymer cell were evaluated as below.

The charge discharge test was conducted using a charge discharge measuring apparatus manufactured by Keisokuki Center Co., Ltd., under conditions wherein the cell was charged while supplying a current of 0.1 mA/cm² until the voltage thereof became from 2V to 3.5 V, and after a 10 minute interval, the cell was discharged while supplying a current of 0.1 mA/cm² until the voltage became 2 V; and the charge-discharge cycle was then repeated. The capacity maintenance ratio (%) between the first and 60^{th} cycles was measured to evaluate the charge discharge properties. In this example, it was possible to obtain an electro-chemical element having a satisfactory solid strength without suffering from short circuits. The results are shown in Figs. 2 and 3.

Furthermore, using the negative electrode of Example 1 and a sample comprising Li foil/cured film/Li foil, a lithium ion conductive test was conducted. Fig. 4 shows the results.

### Examples 2, 3 and 4

Lithium polymer cells were obtained in the same manner as in Example 1 except that instead of the urethane acrylate of Reference Example 1, the urethane acrylates of Reference Examples 2 to 4 were used. Their charge discharge properties were evaluated in the same manner as in Example 1.

### Example 5

A lithium polymer cell was obtained in the same manner as in Example 1 except that instead of the urethane acrylate of Reference Example 1, a mixture comprising the urethane acrylate of Reference Example 1 and the polyisocyanate derivative of Reference Example 5 in a weight ratio of 4 : 1 was used. Its charge discharge properties were evaluated in the same manner as in Example 1.

### Example 6

A lithium polymer cell was obtained in the same manner as in Example 1 except that 65 parts of the urethane acrylate of Reference Example 1 and, as an electrolytic solution, 15 parts of ethylene carbonate were used. Its charge discharge properties were evaluated in the same manner as in Example 1.

### Example 7

A lithium polymer cell was obtained in the same manner as in Example 1 except that, as the silicon oxide, 3 parts of "Aerosil R972" (manufactured by Nippon Aerosil Co., Ltd.) was used. Its charge discharge properties were evaluated in the same manner as in Example 1.

### Example 8

### (1) Preparing a solid electrolyte-positive electrode-assembly

Powdered Li_{0.33}MnO₂ (1.0 g) and Ketjenblack (0.15 g) were well mixed. Separately, 0.10 g of a copolymer of ethylene oxide (88 mol%) and 2-(2-methoxyethoxy)ethy lglycidylether (12 mol%), and 0.033 g of LiN(CF₃SO₂)₂ were dissolved in acetonitrile. The acetonitrile solution was then added to the powder mix of Li_{0.33}MnO₂ and Ketjenblack, and mixed well using a mortar, obtaining positive electrode slurry. The obtained slurry was applied to the surface of a 20 µm-thick aluminum electrolytic foil, and dried at 100°C for 15 minutes, preparing a composite positive electrode having a thickness of 30 µm.

Then, LiN(CF₃SO₂)₂ (5 parts) or LiBF₄ (10 parts) was dissolved in methoxy polyethylene glycol monoacrylate (37 parts). To the resulting solution (28.1 parts), the urethane acrylate of Reference Example 1 (80 parts) and, as a photopolymerization initiator, 1-hydroxy-cyclohexyl-phenyl-ketone (manufactured by Ciba Specialty Chemicals K.K., "IRGACURE 184": 3 parts) were added with mixing, preparing a lithium ion conductive composition (photopolymerizable solution). The resulting composition was then applied to the surface of the 30 µm-thick composite positive electrode using a wirebar in air, irradiated at an irradiation dose of 500 mJ/cm² using a high pressure mercury lamp, and thus forming the cured film having a thickness of 10 µm. A solid electrolyte-positive electrode-assembly was then prepared.

The resulting solid electrolyte-positive electrode-assembly and a lithium foil were attached by thermocompression bonding, and filled into a cell encasement, obtaining a lithium polymer cell of the invention.

The charge discharge properties of the resulting lithium polymer cell were evaluated in the same manner as described above.

### Example 9

### (1) Preparation of solid electrolyte-negative electrode-assembly

LiN(CF₃SO₂)₂ (5 parts) or LiBF₄ (10 parts) was dissolved in methoxy polyethylene glycol monoacrylate (37 parts). To the resulting solution (28.1 parts), the urethane acrylate of Reference Example 1 (80 parts), and, as a photopolymerization initiator, 1-hydroxy-cyclohexyl-phenyl-ketone (manufactured by Ciba Specialty Chemicals K.K., "IRGACURE 184": 3 parts) were added with mixing, preparing a lithium ion conductive composition (photopolymerizable solution). The resulting composition was then applied to the surface of a 100 µm-thick lithium foil using a wirebar in air, irradiated at an irradiation dose of 500 mJ/cm² using a high pressure mercury lamp, and thus forming the cured film having a thickness of 10 µm. A solid electrolyte-negative electrode-assembly was then prepared.

### (2) Preparation of solid electrolyte-positive electrode-assembly

Powdered Li_{0.33}MnO₂ (1.0 g) and Ketjenblack (0.15 g) were well mixed. Separately, 0.10 g of a copolymer of ethylene oxide (88 mol%) and 2-(2-methoxyethoxy)ethy lglycidylether (12 mol%), and 0.033 g of LiN(CF₃SO₂)₂ were dissolved in acetonitrile. The acetonitrile solution was then added to the powder mix of Li_{0.33}MnO₂ and Ketjenblack, and mixed well using a mortar, obtaining positive electrode slurry. The obtained slurry was applied to the surface of a 20 µm-thick aluminum electrolytic foil, and dried at 100°C for 15 minutes, preparing a composite positive electrode having a thickness of 30 µm.

Then, LiN(CF₃SO₂)₂ (5 parts) or LiBF₄ (10 parts) was dissolved in methoxy polyethylene glycol monoacrylate (37 parts). To the resulting solution (28.1 parts), the urethane acrylate of Reference Example 1 (80 parts), and, as a photopolymerization initiator, 1-hydroxy-cyclohexyl-phenyl-ketone (manufactured by Ciba Specialty Chemicals K.K., "IRGACURE 184": 3 parts) were added with mixing, preparing a lithium ion conductive composition (photopolymerizable solution). The resulting composition was then applied to the surface of the above 30 µm-thick composite positive electrode using a wirebar in air, irradiated at an irradiation dose of 500 mJ/cm² using a high pressure mercury lamp, and thus forming the cured film having a thickness of 10 µm, obtaining a solid electrolyte-positive electrode-assembly.

The resulting solid electrolyte-negative electrode-assembly and above solid electrolyte-positive electrode-assembly were attached by thermocompression bonding, and filled into a cell encasement, obtaining a lithium polymer cell of the invention.

The charge discharge properties of the resulting lithium polymer cell were evaluated in the same manner as described above.

The results are shown in Table. 1.

**Table 1**

| | Urethane(meth)acrylate and/or polyisocyanate derivative | Charge discharge property: Capacity maintenance ratio (%) after the 60^{th} cycle |
|---|---|---|
| Example 1 | Reference Example 1 | 80 |
| Example 2 | Reference Example 2 | 83 |
| Example 3 | Reference Example 3 | 85 |
| Example 4 | Reference Example 4 | 88 |
| Example 5 | Reference Example 1 and Reference Example 5 | 91 |
| Example 6 | Reference Example 1 | 95 |
| Example 7 | Reference Example 1 | 83 |
| Example 8 | Reference Example 1 | 84 |
| Example 9 | Reference Example 1 | 90 |

The polymer cell of the present invention is obtained by connecting a negative electrode and a composite positive electrode that are prepared by directly forming, on a lithium foil and/or a composite positive electrode, a lithium ion conductive cured film comprising one or more curable oligomers (preferably, urethane(meth)acrylate and/or branched-structured polyisocyanate derivative), one or more ethylenically unsaturated monomers, one or more electrolytic salts, and, as optional ingredients, silicon oxide fine powders and/or electrolytic solution. The thus obtained polymer cell of the invention exhibits a high ion conductivity, excellent homogeneity, satisfactory strength as a solid electrolyte for use in an electro-chemical element, and remarkably improved charge discharge properties (without deterioration due to repetition of charging and discharging the cell) without suffering from leakage, etc. The cell is very useful as a secondary cell, especially as a lithium ion polymer secondary cell. When the lithium ion conductive cured film contains fine particles of silicon oxide, the mechanical strength thereof is further improved.

In the present invention, by employing a continuous production method from the step of preparing electrodes to the step of preparing a cell as described above, compared to the conventional batch method, it is easier to control each manufacturing step, because, for example, cracking while preparing the composite positive electrode or negative electrode can be prevented.

## Claims

1. A lithium polymer cell sandwiching between a positive electrode and a negative electrode a solid electrolyte comprising a cured film obtained from a lithium ion conductive composition that contains one or more curable oligomers, one or more ethylenically unsaturated monomers and one or more electrolytic salts.

2. A cell according to Claim 1, wherein a composite positive electrode is connected to a solid electrolyte-negative electrode-assembly that is obtained by forming a cured film on a lithium foil using a lithium ion conductive composition containing one or more curable oligomers, one or more ethylenically unsaturated monomers and one or more electrolytic salts.

3. A cell according to Claim 1, wherein a negative electrode comprising a lithium foil is connected to a solid electrolyte-positive electrode-assembly that is obtained by forming a cured film on a composite positive electrode using a lithium ion conductive composition containing one or more curable oligomers, one or more ethylenically unsaturated monomers and one or more electrolytic salts.

4. A cell according to Claim 1, wherein a solid electrolyte-negative electrode-assembly that is obtained by forming a cured film on a lithium foil using a lithium ion conductive composition containing one or more curable oligomers, one or more ethylenically unsaturated monomers and one or more electrolytic salts is connected to a solid electrolyte-positive electrode-assembly that is obtained by forming a cured film on a composite positive electrode using a lithium ion conductive composition containing one or more curable oligomers, one or more ethylenically unsaturated monomers and one or more electrolytic salts in such a manner that the solid electrolyte surfaces thereof are in contact with each other.

5. A cell according to Claim 1, wherein the curable oligomer is urethane(meth)acrylate and/or a polyisocyanate derivative having a branched structure.

6. A cell according to Claim 1, wherein the thickness of the lithium ion conductive cured film is 5-100 µm.

7. A cell according to Claim 1, wherein the lithium ion conductive composition further contains fine particles of silicon oxide.

8. A cell according to Claim 1, wherein the lithium ion conductive composition further contains a electrolytic solution.

9. A method for manufacturing a lithium polymer cell comprising the steps of:
on a lithium foil, applying a lithium ion conductive composition that is free from solvent and contains one or more curable oligomers, one or more ethylenically unsaturated monomers and one or more electrolytic salts;
forming a solid electrolyte-negative electrode-assembly, the solid electrolyte comprising a lithium ion conductive cured film formed by curing the lithium ion conductive composition;
forming a composite positive electrode by applying a positive electrode material to a conductive metal plate; and
connecting the solid electrolyte-negative electrode-assembly to the composite positive electrode.

10. A method for manufacturing a lithium polymer cell comprising the steps of:
forming a composite positive electrode by applying a positive electrode material to a conductive metal plate;
on the composite positive electrode, applying a lithium ion conductive composition that contains one or more curable oligomers, one or more ethylenically unsaturated monomers and one or more electrolytic salts;
forming a solid electrolyte-positive electrode-assembly, the solid electrolyte comprising a lithium ion conductive cured film by curing the lithium ion conductive composition; and
connecting the solid electrolyte-positive electrode-assembly to a negative electrode that is formed of a lithium foil.

11. A method for manufacturing a lithium polymer cell comprising the steps of:
forming a composite positive electrode by applying a positive electrode material to a conductive metal plate;
on the composite positive electrode, applying a lithium ion conductive composition that contains one or more curable oligomers, one or more ethylenically unsaturated monomers and one or more electrolytic salts;
forming a solid electrolyte-positive electrode-assembly, the solid electrolyte comprising a lithium ion conductive cured film formed by curing the lithium ion conductive composition;
on a lithium foil, applying a lithium ion conductive composition that is free from solvent and contains one or more curable oligomers, one or more ethylenically unsaturated monomers and one or more electrolytic salts;
forming a solid electrolyte-negative electrode-assembly, the solid electrolyte comprising a lithium ion conductive cured film formed by curing the lithium ion conductive composition; and
connecting the solid electrolyte-negative electrode-assembly to the solid electrolyte-positive electrode-assembly in such a manner that the solid electrolyte surfaces thereof are in contact with each other.

12. A method for manufacturing a lithium polymer cell according to any one of Claims 9-11, wherein the positive electrode and the negative electrode are sequentially formed and the electrodes are then connected.

13. A method for manufacturing a lithium polymer cell according to any one of Claims 9-11, wherein the lithium ion conductive composition further contains fine particles of silicon oxide.

14. A method for manufacturing a lithium polymer cell according to any one of Claims 9-11, wherein the lithium ion conductive composition further contains electrolytic solution.
